# EUROPEAN PATENT APPLICATION

(11) **EP 2 705 780 A2**
(43) Date of publication of application: **12.03.2014**
(21) Application number: 12780052.2
(22) Date of filing: 30.04.2012
(51) Int. Cl.: A47J 27/08, A47J 36/20

(54) **PRESSURE COOKER FOR COOKING NOODLES**

(30) Priority: 03.05.2011 KR 20110041823
(71) Applicant: Lee, Keun Young, Seongnam-si, Gyeonggi-do 462-241 (KR)
(72) Inventor: Lee, Keun Young, Seongnam-si, Gyeonggi-do 462-241 (KR)
(74) Representative: von Kreisler Selting Werner
(86) International application number: PCT/KR2012/003337
(87) International publication number: WO 2012/150786

(57) **Abstract**

The present invention relates to a pressure cooker for cooking noodles, wherein a cooking container capable of cooking noodles is formed into a net shape inside a main body of the pressure cooker and a lifting means capable of lifting the cooking container is provided, thereby allowing noodles to be evenly cooked through and enabling cooking of high quality noodles with taut and excellent texture through a dual cooking process comprising the following steps: putting noodles in the cooking container, boiling the noodles, and then lifting the cooking container to the surface of the water using the lifting means to steam the noodles at a high temperature and at a high pressure.

## Description

### [Technical Field]

The present invention relates to a pressure cooker for cooking noodles, in which a cooking container capable of cooking noodles is formed in a net shape inside a main body of the pressure cooker and a lifting means capable of lifting the cooking container is provided, thereby allowing noodles to be evenly cooked through and enabling cooking of high quality noodles with taut and excellent texture through a dual cooking process including the following steps: putting noodles in the cooking container, boiling the noodles, and then lifting the cooking container to the surface of the water using the lifting means to steam the noodles at a high temperature and at a high pressure.

### [Background Art]

In general, pressure cookers are devices that have a closed structure and cook food, which is not boiled well under atmospheric pressure, within a short time by increasing the pressure in the cookers. Those pressure cookers can make tough meat or the bone of fish soft and simply make even boiled bean-mixed rice or brown rice. They are made of a thick stainless or aluminum material, the lid is firmly engaged or thread-fastened to be in close contact, and a safety valve is mounted on the lid. The safety valve automatically opens and discharge steam to keep the cookers safe, when the temperature reaches a predetermined level or more, but a sub-safety valve is also provided to further increase the safety. Further, a pressure gauge is provided in some cases. Most domestic pressure cookers are set for pressure of 10 - 201b and temperature of 110 ∼126°C. The pressure may be adjusted to 5 lb and 15 lb in accordance with cooking.

As an example of the pressure cookers, there is disclosed in Korean Patent Registration No. 10-0818224, a "pressure cook-pot for instant noodle" including: a body having a lid; an anti-spattering plate connected to the lower end of a pressure exhaust portion formed at the center of the inner top of the lid and having the edge curved at a predetermined angle around the top center; a handle formed at a side of the body; a timer that includes a timer handle for setting time, a buzzer making a sound when the time set through the timer handle is reached, a cooking selection display and an elapsed time display, which display the standard amount and time when time is set by turning the timer handle, and is formed at the upper end of the handle for setting cooking time; a inner container disposed in the body and having marks indicating an appropriate amount of water according to the number of noodles; a heater heating the inner container; a controller operating the heater, and stopping the heater when the time set in the timer is reached; and a display unit displaying the operation state by the control of the controller.

Further, there is disclosed in Korean Patent Registration No. 10-0916296, "A cooking equipment by pressure vessel" that includes a circular or rectangular support on a lid of pressure container capable of cooking rice or steaming like a pressure cooker and a steamer allowing food such as rice cake or Mandu to be seated, can cook food on the steamer, using steam discharged through a steam outlet at a high temperature and a high pressure at the lid of the pressure container, can easily and quickly cook such as rice cake at a kitchen or anywhere, can be easily manufactured, and is very useful with a simple structure.

Further, there is disclosed in Korean Patent Registration No. 10-0607878, a "Rice cooker which the kind of rice can be selected" which enables consumers to make various kinds of rice such as watery rice, hardboiled rice, rice, and boiled rice and cereals in accordance with the taste of their families by being able to selectively cook two or more kinds of rice at the same time, if necessary, and which includes an inner container disposed inside the cooker and a fixing means on the inner side of the cooker to firmly seat the inner container in the cooker.

However, those pressure cookers, which are cooking equipment used for cooking tough meat or the bones of fish, which are not boiled well, or making boiled bean-mixed rice, boiled brown rice, and boiled rice, have a problem in that they are not suitable as cooking equipment for boiling noodles for Jajangmyoun (noodles with stir-fired bean paste) or Jiamppong (spice seafood noodle soup) as in a Chinese restaurant. That is, noodles have commercial values, when they are appropriately boiled and stringy. However, using a pressure cooker to boil noodles has the advantage of being able to evenly boil the inside of the noodles within a short time, but has the disadvantage that noodles keep boiled in the water inside the cooker and accordingly the noodles easily become sodden and lose the commercial value. Therefore, it is keenly required to develop a pressure cooker that can cook stringy noodle within an appropriate time.

### [Disclosure]

### [Technical Problem]

In order to solve the problems, the present invention provides a pressure cooker for cooking noodles which includes a netted cooking container disposed in a cooker body and a lifting mechanism capable of lifting the cooking container in the cooker body, and can simply cook high-quality noodles by boiling noodles after putting them into water in the cooker body, and then by steaming noodles after lifting the cooking container above water, using the lifting mechanism, when the noodles are boiled.

### [Technical Solution]

In order to achieve the object, A pressure cooker for noodles includes: a cooker body combined with a lid to close the inside; a netted cooking container formed to fit to the inside of the cooker body and disposed inside the cooker body; and a lifting mechanism disposed in the cooker body and lifting the cooking container above the water level so that noodles are taken out of boiled water and steamed, when the noodles in the cooking container finish being boiled in the boiled water.

It is preferable that a step is formed around the inner side of the cooking container and a flat netted separation plate fitting to the inner side of the cooling container and having the edge placed on the step so that a plurality of separation layers are formed is disposed in the cooking container.

It is preferable that a radial separation plate is disposed in the cooking container so that the inside of the cooking container is radially divided and different kinds of foods are simultaneously cooked.

It is preferable that the lifting mechanism includes: a lifting member fitting to the lower edge of the cooking container to support the bottom of the cooking container and having rings opposite each other around the outer side; a lifting motor disposed at one side in the cooker body; and a wire with one end connected to one side of the upper portion of the cooker body and the other end connected with the lifting motor sequentially through the rings opposite each other around the lifting member across the bottom of the lifting member.

It is preferable that the lifting member has: a bottom fitting to the bottom of the cooking container and supporting the bottom of the cooking container; and an upper portion becoming wider than the bottom of the cooking container, as it extending upward from the bottom.

It is preferable that a guide roller for smooth movement of the wire is disposed at one side of the cooker body, wherein the lifting motor is disposed.

It is preferable that a plurality of guide rollers is disposed around the cooking container, in close contact with the inner side of the cooker body.

### [Advantageous Effects]

According to the pressure cooker for noodles of the present invention, it is possible to simply cook taut, stringy, and chewy noodles by putting noodles into the cooking container combined with the cooker body, boiling the noodles, lifting the cooking container above the level of the water with the lifting mechanism when the noodles are appropriately boiled, and then steaming the noodles.

### [Description of Drawings]

FIG. 1 is a cross-sectional view showing an exemplary embodiment of the present invention.
FIG. 2 is a perspective view of a cooking container according to an exemplary embodiment of the present invention.
FIG. 3 is a perspective view of a lifting mechanism according to an embodiment of the present invention.

### [Mode for Invention]

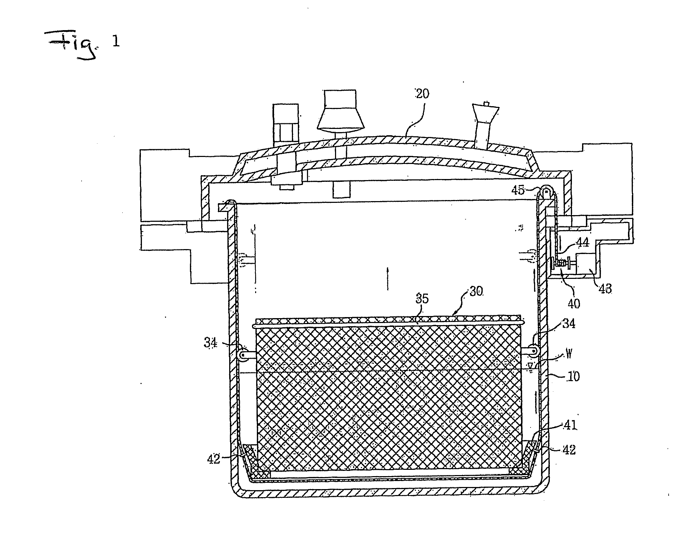

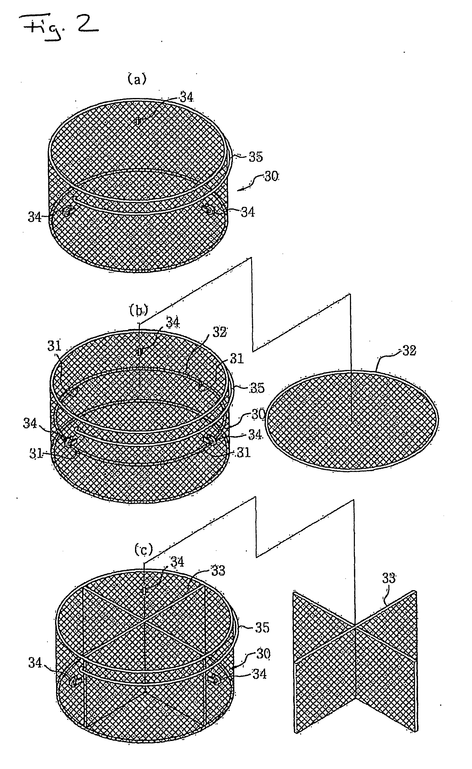

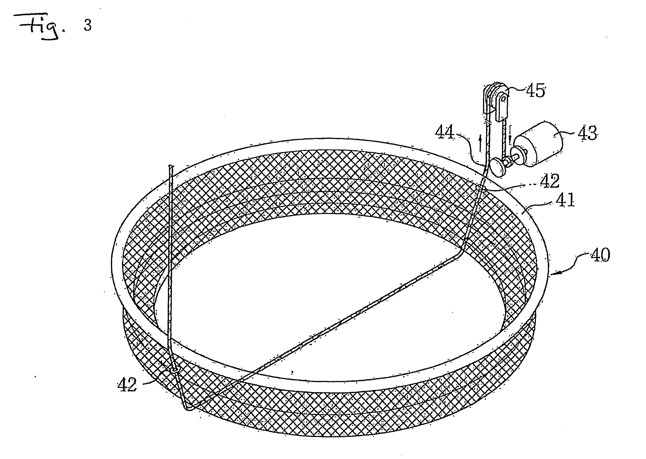

FIG. 1 is a cross-sectional view showing an exemplary embodiment of the present invention, FIG. 2 is a perspective view of a cooking container according to an exemplary embodiment of the present invention, FIG. 3 is a perspective view of a lifting mechanism according to an embodiment of the present invention, and the configuration of the present invention will be described with reference to the accompanying drawings.

A pressure cooker for cooking noodles according to the present invention includes a cooker body 10 with a lid 20 closing the inside of the cooker so that food can be cooked at the atmospheric pressure, a cooking container 30 that is a netted container for cooking noodles, and a lifting mechanism 40 lifting the cooking container 30 after noodles are boiled so that the noodles can be steamed.

In detail, the cooker body 10 and the lid 20 are made of a thick stainless or aluminum material and the lid 20 is engaged or thread-fastened to the upper portion of the cooker body 10 to close the cooker body 10. The lid 20 is equipped with a safety valve. The safety valve keeps safety by automatically opening to discharge steam, when a predetermined pressure is reached, but a sub-safety valve or a pressure gauge may be provided to further increase the safety.

The cooking container 30 is a netted container fitted in the cooker body 10 to be able to cook noodles inside the cooker body 10 and a handle 35 is coupled to the upper portion of the cooking container 30 so that the cooking container 30 can be easily taken out of the cooker body 10. The handle 35 is stood up when the cooking container 30 lifted, and is laid down around the cooking container 30, as in FIG. 1, not in contact with the lid 20 when the cooking container 30 is put input the cooker body 10. Further, it is preferable to dispose a plurality of guide rollers 34 around the cooking container 20, in contact with the cooker body 10. The guide rollers 34 are in close contact with the inner side of the cooker body 10, so that they allow the cooking container 20 to be smoothly lifted, by minimizing the friction when the cooking container 20 is lifted.

Further, as in (a) of FIG. 2, the inside of the cooking container 30 may not be divided in order to cooking only food material, but may have only one space.

Further, as in (b) of FIG. 2, a step 31 is formed around the inner side of the cooking container 30, so it is possible to cook other food materials, in addition to noodles, by placing the edge of a flat separation plate 32 fitting to the inside of the cooker container 30 on the step so that the cooking container 30 is divided into upper and lower sections. That is, it is possible to cook noodles in the upper section and vegetables in the lower section, at the same time.

As in (c) of FIG. 3, cooking sections that are radially separated may be formed by putting a radial separation plate 33 in the cooking container 20, so it is possible to simultaneously cook various foods, not only noodles, but vegetables, in the separated sections.

The lifting mechanism 40 allows the noodle to be steamed at a high temperature and a high pressure, when the noodles in the cooking container 30 finished being boiled, by lifting the cooking container 30 with the noodle in the cooking container 20 positioned above the level W of boiled water. The lifting mechanism 40 is composed of a lifting member 41 supporting the bottom of the cooking container 30, a lifting motor 43 disposed at one side in the cooking body 10, and a wire 44 with one end connected to one side of the upper portion of the cooking body 10 and other end connected to the lifting motor 43 sequentially through rings 42 opposite each other around the lifting member 42.

That is, the lifting member 41 fits to the bottom of the cooking container 30 to be able to support the bottom of the cooking container 30 and operated by the lifting motor 43 and the wire 44 to lift the cooking container 30. Further, the lifting member 41 has the bottom fitting to the bottom of the cooking container 30 to place the bottom of the cooking container 30 thereon and an upper portion extending upward from the bottom, inclined to be wider than the bottom of the cooking container 30, which becomes wider, as it goes upward, and having the rings 42 opposite each other around the outer side.

The reason of making the upper portion of the lifting member 41 wider at an angle, as it goes upward, is for stably seating the bottom of the cooking container 30 sliding down along the inclined surface of the upper portion, even if the bottom of the cooking container 30 is not accurately fitted.

The wire 44 has one end connected to one side of the upper portion of the cooking container 10 and the other end connected to the lifting motor 43 sequentially through the rings 42 opposite each other around the lifting member 41, so that the wire is operated by the lifting motor 42 to lift the cooking container 30 by lifting the lifting member 41. It is preferable that the wire 44 is a metal wire.

On the other hand, it is preferable to dispose a guide roller 45 that guides the wire 44, at one side of the upper portion of the cooker body 10, where the lifting motor 43 is disposed, to stably pull the wire 44, and it is preferable that the cooker body 10 is 1.5 - 2 times deeper than the cooking container 30 so that the cooking container 30 can freely move up/down.

Further, in the pressure cooker for noodles according to the present invention can, in addition the basic functions of pressure cookers, it is possible to set cooking time by electrically connecting a timer and cook noodles in the optimum state by heating them at an appropriate temperature in accordance with the set time.

As described above, the pressure cooker for noodles according to the present invention can cook high-quality stringy noodles by boiling the noodles in the cooking container 30 and then steaming the noodles, by making the cooking container 30 in a netted container fitting to the cooker body 10 and disposing the lifting mechanism 40 that can lift the cooking container 30. The process of cooking noodles by the pressure cooker for noodles according to the present invention is described hereafter with reference to the drawings.

As in FIGS. 1 to 3, the cooking container 30 is combined with the cooker body 10 such that noodles are sunk in boiled water in the cooker body 10. After the noodles are boiled in the water in the cooker body 10, the cooking container 30 is lifted above the water level W by the lifting mechanism 40.

The lifting mechanism 40 may be implemented by a switch that is automatically or semi-automatically operated. For example, in the automatic type, data such as temperature or time for boiling noodles is inputted in advance in a program in the controller, and when the temperature and time when the noodles are boiled become the same as the data in the controller, the controller senses them and drives thee lifting motor 43, and thus the cooking container 30 can be lifted.

Sending signals to the controller can be made by a sensor. For example, a sensor such as a temperature sensor may be disposed in the cooker body 10 so that when the temperature of water while the noodle are boiled reaches the temperature set in the controller, the sensor senses the temperature and sends a signal to the controller to that the controller drives the lifting motor 43.

As described above, the controller receiving the signal from the sensor drives the lifting motor 43 by applying power to the lifting motor 43 and the wire 44 lifts the lifting member 41 while being tightly pulled to the lifting motor 43. Accordingly, the cooking container 30 on the lifting member 41 is also lifted. As the cooking container 30 is lifted, the noodles in the cooking container 30 is taken away from the level W of the boiled water and the noodles moved away from the level W of the boiled water is steamed by the steam from the boiled water.

As described above, the pressure cooker for noodles according to the present invention can cook high-quality stringy and chewy noodles with the inside evenly boiled, through a double cooking process that evenly boils the inside of noodles by boiling the noodles in boiled water and steams the noodles with after lifting the cooking container 30 above the level W of the water such that the noodles are not boiled any more, when the noodles become stringy.

Although preferred embodiments of the present invention were described in detail with reference to the drawings, they are only examples and the present invention may be changed and modified in various ways without departing from the spirit of the present invention. Therefore, the scope of the present invention should be determined by claims.

## Claims

1. A pressure cooker for noodles, comprising:
a cooker body combined with a lid to close the inside;
a netted cooking container formed to fit to the inside of the cooker body and disposed inside the cooker body; and
a lifting mechanism disposed in the cooker body and lifting the cooking container above the water level so that noodles are taken out of boiled water and steamed, when the noodles in the cooking container finish being boiled in the boiled water.

2. The pressure cooker of claim 1, wherein a step is formed around the inner side of the cooking container and a flat netted separation plate fitting to the inner side of the cooling container and having the edge placed on the step so that a plurality of separation layers are formed is disposed in the cooking container.

3. The pressure cooker of claim 1, wherein a radial separation plate is disposed in the cooking container so that the inside of the cooking container is radially divided and different kinds of foods are simultaneously cooked.

4. The pressure cooker of claim 1, wherein the lifting mechanism includes:
a lifting member fitting to the lower edge of the cooking container to support the bottom of the cooking container and having rings opposite each other around the outer side;
a lifting motor disposed at one side in the cooker body; and
a wire with one end connected to one side of the upper portion of the cooker body and the other end connected with the lifting motor sequentially through the rings opposite each other around the lifting member across the bottom of the lifting member.

5. The pressure cooker of claim 4, wherein the lifting member has:
a bottom fitting to the bottom of the cooking container and supporting the bottom of the cooking container; and
an upper portion becoming wider than the bottom of the cooking container, as it extending upward from the bottom.

6. The pressure cooker of claim 5, wherein a guide roller for smooth movement of the wire is disposed at one side of the cooker body, wherein the lifting motor is disposed.

7. The pressure cooker of claim 1, wherein a plurality of guide rollers is disposed around the cooking container, in close contact with the inner side of the cooker body.
